# EUROPEAN PATENT SPECIFICATION

(11) **EP 2 113 485 B1**
(45) Date of publication and mention of the grant of the patent: **12.12.2012**
(21) Application number: 08167632.2
(22) Date of filing: 27.10.2008
(51) Int. Cl.: C02F 1/00, C02F 3/10

(54) **Set of sequential filters for graywaters treatment**
Satz aus aufeinanderfolgenden Filtern zur Grauwasserbehandlung
Ensemble de filtres séquentiels pour le traitement des eaux ménagères

(30) Priority: 02.05.2008 BR 8013691
(43) Date of publication of application: 04.11.2009
(73) Proprietor: Barbosa da Silva, Paulo Roberto, 24230-065 Niterói (BR)
(72) Inventor: Barbosa da Silva, Paulo Roberto, 24230-065 Icaraí/Niterói (BR); Rodrigues dos Santos, Alexandre, 24220-420 Santa Rosa/Niterói (BR)
(74) Representative: Bergmeier, Werner

(56) References cited:
- WO-A-97/07063
- WO-A-2006/053402
- WO-A-2007/136160
- WO-A-2008/046927
- GB-A- 1 402 187
- GB-A- 2 336 359
- US-A1- 2005 000 877

## Description

### FIELD OF THE INVENTION

The present invention in general relates to filtering systems of reuse water and, in particular, to a new sequential filter for use in a system of grey water filtering aiming to reuse said water in irrigation, washing, toilets and other purposes compatible with clean but not potable water.

### BACKGROUND OF THE INVENTION

The GB 2 336 359 A discloses an Apparatus for the treatment of wastewater comprises a fixed structured first medium and a granular second medium in two distinct zones and an inlet for supplying oxygen or a source-of oxygen to the apparatus. The two media support, in use, microorganisms for treatment of the wastewater (e.g. carbonaceous treatment, denitrification and/or nitrification).

The second zone containing the granular second medium has a depth of less than 2 metres, thereby improving the oxygen transfer efficiency of the apparatus. The apparatus is arranged such that in use, the oxygen supplied flows through one medium and subsequently through the other medium so that oxygen not consumed by the microorganisms of one medium is available for consumption by the microorganisms of the other.

The first medium preferably has a specific surface area of less than 250m2/m3. The granular second medium can act as a filtration barrier to filter off biomass which has become detached from the first medium and/or to filter off solids present in the wastewater prior to treatment. An empty expansion zone can be provided between the two media into which the granular, medium can move during backwashing/scouring of the apparatus.

The US 2005/0000877 A1 discloses a filtration apparatus includes a tank having an upper chamber and a lower baffle, layers of stone and carbon between the upper chamber and the lower baffle, a water Met to the upper chamber, and a water outlet below the lower baffle. The upper chamber is divided by a first baffle which separates the chamber into two parts, a first part in direct communication with said water inlet and a second part in direct communication with said backwash outlet. An air manifold coupled to an air pump is placed between the lower baffle and the upper chamber. During backwash, air is mixed with water to cause a turbulent flow. A further baffle is provided between the first baffle and the backwash outlet which provides a more uniform removal of contaminants from the tank.

The WO 2006/053402 A1 discloses an aerated biological filtration system for treating waste water includes a treatment vessel of elongated configuration which incorporates a circulating filter bed and a static filter bed. The circulating filter bed incorporates a particulate material such as granulated activated carbon having a specific gravity in the range of 1.2 to 1.4 and effective size of 0.6mm to 1.5mm. The circulating filter bed is disposed above the static filter bed and an aeration system is disposed between the filter beds. The aeration system is arranged to diffuse air through the circulating bed either continuously or intermittently so as to provide oxygen to microorganisms attaching to the particulate material and to cause slow circulation of that particulate material. The system has particular application for domestic recycling of grey water.

The GB 1 402 187 A discloses a packing medium for biologically treating waste water in a percolating filter, comprising randomly packed extruded hollow open-ended cylindrical pieces of an inert organic polymeric material, the wall of each cylindrical piece being provided, throughout its length, as a plurality of corrugations which lie in planes which are transverse to or oblique to the main axis of the cylindrical piece, each of said corrugations in the wall of each cylindrical piece having a depth in excess of the thickness of the wall.

The WO 97/07063 A discloses a biological and mechanical filtration System for use in the treatment of water used in recirculating systems, such as in the aquaculture, aquarium and water purification industries. The filtration medium comprises a plurality of massed, randomly disposed hollow cylindrical or tubular elements, ideally having a specific gravity of less than 1.0, with each element having a ratio of length to diameter of about 1.5:1.

The WO 2008/046927 A1 discloses a biofilm support component intended to be immersed in a biological water purification reactor, comprising a tubular envelope having two end openings that communicate with each other via a channel, said envelope having an inner surface delimiting said channel and an outer surface, said envelope having a series of corrugations that form deformations of said inner surface and of said outer surface, characterized in that said envelope has a length less than or equal to 15 mm and in that the volume of said corrugations that form deformations of said inner surface and the volume of said corrugations that form deformations of said outer surface each represent between 20 % and 29% of the total volume of said envelope

### Types of Waters and Sewers

Essential element for the survival of human beings and for all human beings, drinking water is becoming more expensive and scarce. Some forecasts point to the lack of drinking water in a near future. The most common source of water pick-up is the rivers that are each day more polluted what requires each time more treatments for the consumption of that water. The water recycling, in a few years, will be a general practice, since such element that we need so much will become very expensive.

It should also be taken into consideration the disordered consumption of the natural water resources due to the high population growth. This consumption, today, is bigger than nature can provide, and the pollution produced by mankind is increasingly contaminating and diminishing these resources.

It is necessary a clarification approach directed to population regarding consumption, what is already being carried out by environmental agencies and by water supply utility companies.
1) Black waters and Grey Waters. Black water is the water resulting from primary, sewage composed of solid elements in bacterial decomposition. The treatment of these waters aims not contaminating the environment upon discharging in the water table. It is considered as secondary sewer of a residence (grey waters) the waters originating from laundry (wash machine), tank, shower and sinks of bathroom.
2) The reuse it greywater, although much more clean than the sewer water that is considered black, presents special chemical and biological aspects, which neutralization for reuse is being studied by many groups interested in this application.

The greywater is poorly homogeneous, constituted of residues of skin, soaps, detergents, dental cream, hair, fats, sweat, and others. The technology for the treatment of this type of water is not public yet. The literature of the techniques of reuse is extensive, but without offering the necessary information clearly. There are some groups of study striving for this water (water of reuse) reaching the toilets to have clean aspect, and be sterile.

### 1) Water consumption

In this topic we present statistics on average residential water consumption so that we can calculate the percent saving occurring in a residence due to reuse of greywaters.

### POPULATION OF LOW MIDDLE CLASS

a) Average water consumption per person: 4.5R (C = m³) per month = 4.5 m³ per month = 4,500 Liters per month = 150 Liters per day.
b) Daily average consumption of greywaters (considering shower with average flow of 3.5 Liters per minute and bath during approximately 15 minutes)
   1 -15.5 **X** 3.5 = 52.5 liters.
   2- 52.5 X 30 (days) = 1.575 liters/month = 1.57 m³.
   3- This means 34.88% the total monthly consumption.
c) Average daily consumption with discharges (considering that each discharge has flow of approx. 10 liters).
   1- Average of discharges = 5 x per day = 50 liters/day.
   2- 50 X 30 = 1,500 liters = 1,5 m³/months.
   3 - This means 33.33% the total monthly consumption.

### POPULATION OF HIGH MIDDLE CLASS

In this context, according to technical data, the rational use of the water becomes essential, therefore, it is estimated that the volume of water consumed in each family residence in Brazil is of about 200 liters daily, as follows:
- 27% kitchen and ingestion.
- 25% personal hygiene.
- 12% washing clothes.
- 3% in other equipment.
- 33% in the discharge of toilets, being clear with the reuse of "grey water" it is saved 1/3 the water of a residence, daily.

### 4) Techniques for saving in the consumption of supply water.

The most discerning people of our population already save water at home with the suggested directions, such as:

To close taps while they brush teeth, they make beard, they soap the ware or they take bath.

To diminish the time in the bath.

Not to use hose to wash floors (hydraulic broom), sidewalk, automobiles, etc.;

To replace discharge valves with boxes coupled to toilets having volume limiter per discharge: (several models available in the market).

In this case you can choose toilets designed use a minimum volume of water and that volume is enough for a good washing of toilet (between 4,5 and 6 liters). The most common spends around 10 (ten) liters per discharge. In some models it is possible to diminish the water level inside the discharge box adjusting the float to close at a lower level. There are other interesting models such as vacuum systems and dry.

In other countries there are used toilets with two buttons for discharge, one for discharge with urine only (with lower volume), and the other to activate the discharge for general washing. It is of common knowledge that, experimentally, such type of discharge is already in use in Brazil.

### 5) Techniques for saving used water.

We present below some options for saving water by mean of the reuse of water.
a) Exploitation of the rain water.
   It is the project most involving of all. It is a permanent dream. But it does not have immediate application for the population of cities due to the following difficulties:
   Lack of space for installation of water reservoirs.
   Necessity for control of first rain water collected, very dangerous, since it is the result of washing the air pollution and dirty accumulated in the roofs.
   High cost of all these installations.
   The city of São Paulo/SP implemented the so-called "swimming pools" with high cost, becoming impracticable the construction for other cities, even in the city of São Paulo, the construction of new swimming pools due to the cost.
b) Reuse of the water present in the primary sewer (blackwater). In Brazil in some cities, it has been used the reuse of water that comes from effluent. A sewer treated to the point to be returned to rivers and water ducts that is enough clean for washing streets, watering of parks and applications of industrial use. At home such water is used for washing toilets, etc.
   That water could substitute about 40% the drinking water at home. But the utility companies do not have conditions to offer that water to end user, since for that it would be necessary the installation of one more system of water distribution, parallel to that already implanted for drinking water. There is the alternative of purchasing and mandatory care of in the expensive stations of treatment, mono or multi-familiar, that could supply the reuse water corring from the familiar or communitary sewer.
c) Reuse of water present in the secondary sewer (grey water).
   As already explained, it refers to water used in bath, sinks of bathrooms, laundries, etc. li is believed that the treatment of that grey water could be carried out in an easy way, at low cost, allowing the reuse of that water, generating an economy of more than one third the total water consumed at home, as shown in item 3 above. This technique leads to eliminating the use of drinking waters (when possible), supplied by the utility, being it all substituted by the Water of Reuse, without the cost of this operation being prohibitive.

In some countries much is said and imagined about the systematic use and large-scale use of the reuse of greywaters. However, the technology proposed for that has always fallen into the expensive and technologically complex treatment of typical systems of treatment of primary and/or industrial sewer. In the other end there are simple treatments for one-family residences in some countries with problems of supplying and the almost exclusive reuse in gardens.

Anyway reuse is not yet institutionalized as usual practice, although the trend is that.

In relation to the treatment there is an effort for the water of reuse to reach the toilets sterile, with a clean aspect, without smell or with smell pleasant for this purpose. Literature on techniques of reuse is extensive, but without offering detailed information and conditions of easy and immediate application.

In view of everything explained above, there is in the state of the art the necessity for a system of filters of reuse capable of providing filtering of low cost, simple maintenance and easy installation, providing a wide portion of the population with the saving of this scarce thing that is the drinking waters.

### OBJECT OF THE INVENTION

To fulfill the necessity of the state of the art the present invention contemplates a set of sequential filters for filtering greywater in order to get water of reuse comprising two tubular elements interconnected by connections and containing in the interior of one of the tubular elements expanded clay and in the interior of the other tubular element perforated plates arranged one over the other and between the same corrugated tubular filter elements. The interior of the bottom of the interconnected tubular elements is filled with stone.

### BRIEF DESCRIPTION OF THE DRAWINGS

- **Figure 1**: is a schematical frontal view of the typical installation of the filter of the present invention.
- **Figure 2**: is a schematical section view of the filter of Type 2 of the present invention without water in its interior. The section view of the filter of Type 1 is in Figure 1.
- **Figure 3**: is a schematical section view of the filter of Type 2 of the present invention with water in its interior.
- **Figure 4**: is a view in details of the perforated circular plates containing corrugated tubular elements of the filter of the present invention.

### BRIEF DESCRIPTION OF THE PREFERRED EMBODIMENTS

The present invention will be now described with regard to the drawings in annex.

The sequential filter for greywaters treatment of the present invention will be used only and exclusively for treatment of greywaters, being able to be applied in urban or agricultural areas, in treatment of domestic or agro-industrial and industrial sewers, hotels, in farms of swines, great laundries, cold storage rooms, slaughteries and the like preventing, thus, the aggression caused by these activities to the environment (effluent discharged).

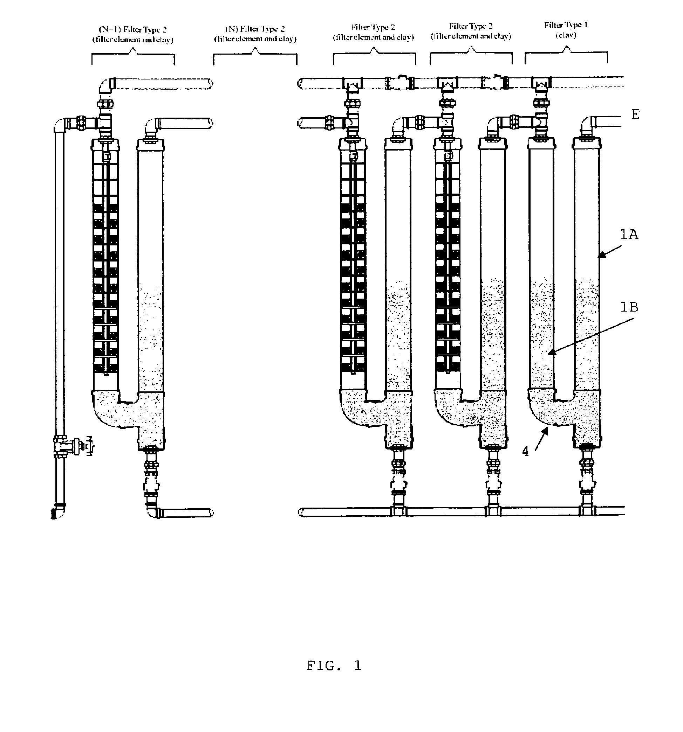

Figure 1 is a schematical representation of the installation of the sequential filter for greywaters treatment. The sequential filter is composed of some sets of filters Type 1 (clay) and Type 2 (filter element of stone and clay) in sequence. The present invention relates only to the filter Type 2 (filter element of stone and clay). The filters Type 1 (clay) do not form part of the invention. They only represent background art that is useful for understanding the invention. The amount of filters of the Type 1 and Type 2 depends on each specific application. Stone is "an almost perpetual" material and has a great potential of filtering (retention of particulate) and when purging (washing the filters) nothing is captured in its walls. The clay Class 2 in general occupies 50% of the space of the tubular element 1A. This amount is the one that better provides functioning of the sequential filters of the present invention.

The filter of Type 1 presents two tubular elements 1A and 1 B having each one in its superior end a cap 3 to seal the interior of the tubular space and to accommodate the connections for linking the filter to the tubing net. The greywaters enter the filter Type 1 via entrance E. In general, the tubular elements 1A and 1 B are 150 mm nominal diameter. The lower end of the tubular element 1A receives a priece 2 in T. The other end of this part 2 in T receives a cap 3 to seal the interior of the tubular space and also accommodate the connections for linking the filter to the tubing. The branch of part 2 in T is connected to a knee 4 that in turn is connected to the tubular element 1 B that in its upper end has installed a cap 3 also to seal the interior of the tubular space and to accommodate the connections for linking the filter to the tubing. The filtration inside this Filter Type 1 is made by means of two filter elements, one made up of clay represented by numeral 5 and the other made up of stone represented by numeral 6. Preferably, the clay is expanded clay Class 2 and the stone is of size 25,4 mm.

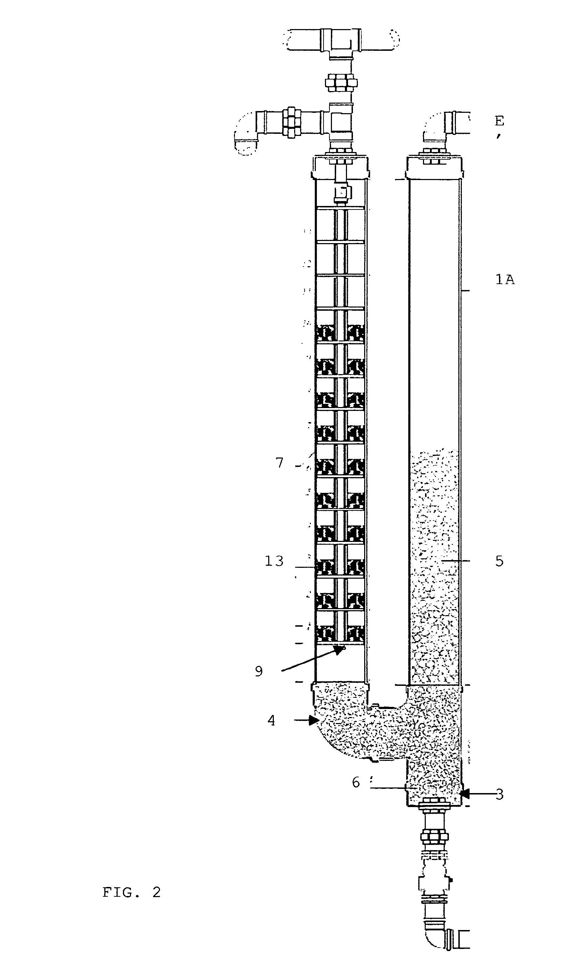

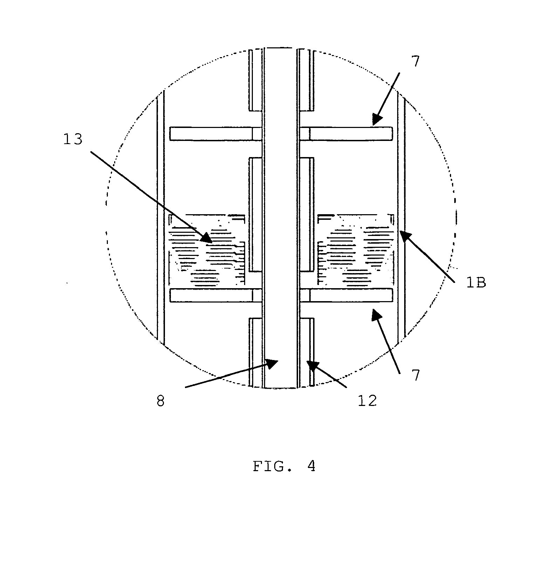

Figure 2 represents the filter of Type 2 when the same has no water in its interior. It must be noticed that the construction of this filter Type 2 is identical to that one of the filter Type 1 as for the tubular elements and of closing, however, the functionality of the filter Type 2 is different due to its filter elements, what will be described in more details below. In the condition represented in Figure 2, water to be filtered enters the interior of the tubular element 1A via inlet E' (the necessary connections for such inlet are not part of the present invention). This water to be filtered in the sequential filter of the present invention before arriving the same passes through a box for retention and disinfection. This box of retention and disinfection (not illustrated) will have the purpose to receive effluent from greywaters through the sewer tubing (discharge without pressure), store and distribute greywaters for the sequential filters of the present invention whenever requested by the system. This box of retention will have, in general, a head between one to two meters, so that the sequential filters receive the discharge from the effluent without pressure and start to work slowly by the principle of communicating vases. The box of retention will be customized for each project. All the effluent discharged is one clay (24-hour period) will be treated slowly and transformed into water of reuse in the same day, hence the need for the box for retention to be sized to store the effluent in the peak hours and to release during the day. The routine of work of the sequential filters will never change, since they will also be sized to treat all the effluent along the 24 hours of the day. The tubular element 1A of the filter Type 2 presents the same filter element of the filter Type 1, that is, expanded clay class 2 and stone of 25,4 mm size. The tubular element 1 B of the filter Type 2 internally has some circular perforated plates 7 settled in sequence to a tubular support. This setting is better shown in Figure 4.

In Figure 4, pipe 8 is sealed in its lower end by a cap 9 and in the other end it receives a "T" piece that will collect via passage P the water filtered by filter elements 11 arranged in the circular perforated plates 7 and will discharge via passage P' to the next set of filters or the tubing. A circular perforated plate 7 is installed on cap 9. Just above is placed a spacer 12 of pipe having a bigger diameter than pipe 8 to provide spacing between perforated circular plates 7 and space for installation of corrugated tubular filter elements 11. The amount of circular perforated plates 7 and spacers 12 depend on the size of the filter. Still with regard to Figure 4, the filter elements 11 of corrugated tubular sections 13 are arranged on the circular perforated plates 7 to hold back particulate material carried by the water flow. The circular perforated plates 7 present two circular holes located in the circular crown of the same to allow the passage of water for filtering.

The circular perforated plates 7 are thirteen (capable of varying as a function of customization of the project) with approximately 14,5 cm diameter having central hole of approximately 12,7 mm where it will also pass a pipe 8 of PVC of approximately 12,7 mm nominal diameter. These plates will be supported in spacers 12 of pipe of approximately 25,4 mm diameter with approximately 10 cm height. The plate 7 will have two holes of approximately 9 mm for the passage of water to filter.

Amongst the set of 13 (thirteen) circular perforated plates 7 the first one from knee 4 to top is empty and among the ten remaining plates (between each plate) the space is filled with the corrugated tubular sections; the three last plates also are empty.

The corrugated tubular sections can be pipes of PVC corrugated longitudinally sectioned with the main function of holding back the particulates. Between plates, 50% of the void will be filled with this material and the other 50% will be empty, so that there can be upward movement and downward movement of this material causing the aggregation of the particulate. This material together with the plates proved to be excellent retainer of particulate.

The main function of the circular perforated plates 7 and corrugated tubular sections 13 is to hold back the particulate. In each passage there will always be a little of flakes caused by the adsorption of polymers, until in the last filter there is the water of reuse.

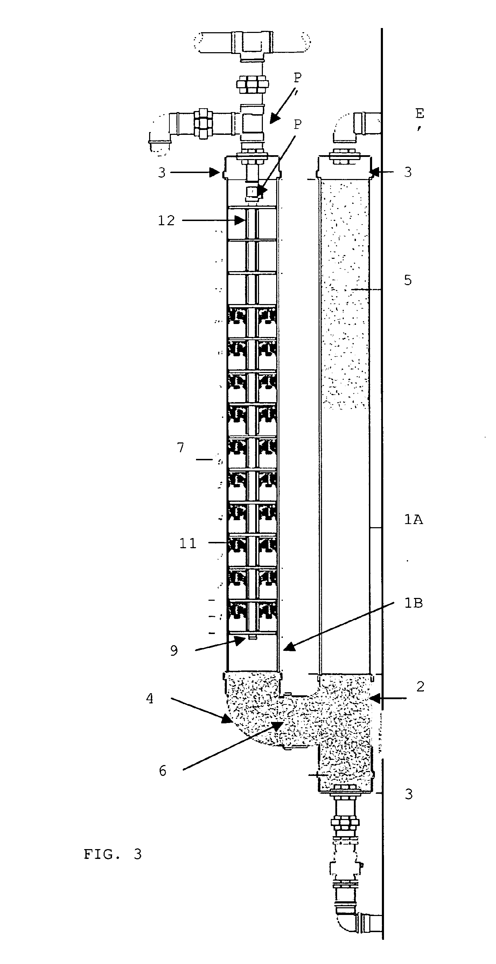

Figure 3 is a section view of the Filter Type 2 showing the condition in which the same is full of water to filter. In this condition, when of the admission of the water the clay Class 2 floats in the interior of the tubular element 1A and in the same way when the water passes to the tubular element 1 B the filter elements of corrugated tubular sections 13 also float.

The sequential filters for water of reuse of the present invention have the purpose to replace the conventional system of flocculation of solids in suspension, that is electromechanical (it uses agitators/floculators, with the use of machinery and electric power), with a new system of filtering functioning by gravity. The several materials used as filter medium (expanded clay, stone, and filter elements 11 of corrugated tubular sections 13) promote the flocculation of the particulate taking them to decantation. Periodically the filters are cleaned through drains (purgue). The draining will be made by the pipe fitting connected to cap 3 of each lower end of each tubular element 1A.

Further to not using electric power and materials of high cost, the sequential filters of the present invention do not need backwashing, as they use polymers in the process and the filter material does not coalesce (when the residues do not let the liquid to pass) and are not subject to wear that is common in the conventional filters. In the sequential filters of the present invention, most of the solids in suspension is eliminated by draining (according to standards that regulate the subject, nationally on internationally). After the filtering by the sequential filters of the present invention, the water is treated inside a reservoir with applicable chemical products, mainly "organic origin chlorine" (product that does not form cancerous by products) what will guarantee the disinfection and conservation, leaving the water safe for reuse in sanitary toilets.

Functioning in the Interior of the Sequential Filters

The flocculation inside of the sequential filters of the present invention occurs due to ascending/moving of the clay (it goes up and it goes down) what promotes the agglutination of particulate and, later, the decantation mainly of solids in suspension.

The upward and downward movement of clay is caused by the expulsion of air at the first moment, when of the abrupt reduction of the tubing that feeds the filters: always in the first filter the gauge of the inlet has to be double the second feeding.

When there is demand for more water (by discharge), request for more water in the water deposit, clays moves again causing friction between themselves; with the insertion of polymers in the filters, indicated in the figures, the particulate agglutinates, becoming more heavy and with this they suffer decantation, rendering the effluent cleaner.

After this process, in the upward movement of the water to another filter the particulate face resistance in the plates of PVC with filling of filter elements of corrugated tubular sections also of PVC, this barrier one more time causes the retention of solids, and thus the water is filtered.

## Claims

1. Set of sequential filters for greywaters treatment, **characterized by** comprising:
a first (1A) and a second tubular element (1 B) interconnected by a connection (2, 4) and sealed in their ends with caps (3);
the first tubular element (1A) being filled in its interior in part with expanded clay (5);
the second tubular element (1 B) having in its interior a central pipe (8), this central pipe (8) sealed in its lower end with a cap (9) and in its upper end having a passage (P) and perforated circular plates (7) arranged one over the other around of the pipe (8) spaced apart by spacers (12), wherein some spaces between two of the successive perforated circular plates (7) are filled in part with corrugated tubular filter elements (11) in such a way that the corrugated tubular filter elements (11) can float in the space when greywater floats through the second tubular element (1B);
the interconnection between the first (1A) and the second tubular element (1B) being filled with stone (6).

## Patentansprüche

1. Satz sequentieller Filter für Grauwasserbehandlung, **dadurch gekennzeichnet, dass** sie umfassen:
ein erstes (1A) und ein zweites Rohrelement (1 B), die durch eine Verbindung (2, 4) miteinander verbunden sind und an ihren Enden mit Kappen (3) abgedichtet sind;
wobei das erste Rohrelement (1A) in seinem Inneren teilweise mit Blähton (5) gefüllt ist;
das zweite Rohrelement (1 B) in seinem Inneren aufweist:
ein Zentralrohr (8), wobei dieses Zentralrohr (8) an seinem unteren Ende mit einer Kappe (9) abgedichtet ist und an seinem oberen Ende einen Durchlass (P) aufweist
und perforierte kreisförmige Platten (7), die übereinander um das Rohr (8) angeordnet sind, durch Abstandshalter (12) auseinander gehalten, wobei einige Zwischenräume zwischen zwei der aufeinanderfolgenden perforierten kreisförmigen Platten (7) teilweise mit gerippten rohrförmigen Filterelementen (11) auf solche Weise gefüllt sind, dass die gerippten rohrförmigen Filterelemente (11) in dem Zwischenraum aufschwimmen können, wenn Grauwasser durch das zweite Rohrelement (1 B) treibt;
wobei die Zwischenverbindung zwischen dem ersten (1A) und dem zweiten Rohrelement (1 B) mit Stein (6) gefüllt ist.

## Revendications

1. Batterie de filtres séquentiels pour le traitement des eaux ménagères usées, **caractérisée en ce qu'**elle comprend :
un premier (1A) et un second élément tubulaire (1 B) interconnectés par une connexion (2, 4) et bouchés à leurs extrémités par des bouchons (3) ;
le premier élément tubulaire (1 A) étant partiellement rempli en son intérieur d'argile expansée (5) ;
le second élément tubulaire (1 B) comportant en son intérieur un tube central (8), ce tube central (8) étant bouché à son extrémité inférieure à l'aide d'un bouchon (9) et comportant un passage (P) à son extrémité supérieure,
et des plaques circulaires perforées (7) disposée l'une sur l'autre autour du tube (8) et distancées l'une de l'autre par des écarteurs (12), sachant que certains espacements entre deux des plaques circulaires perforées successives (7) sont partiellement remplis d'éléments filtrants tubulaires ondulés (11) de telle manière que les éléments filtrants tubulaires ondulés (11) puissent flotter dans l'espace lorsque de l'eau ménagère usée flotte à travers le second élément tubulaire (1B) ; l'interconnexion entre le premier (1 A) et le second élément tubulaire (1 B) étant remplie de pierre (6).
